# EUROPÄISCHE PATENTSCHRIFT

(11) **EP 0 963 953 B1**
(45) Veröffentlichungstag und Bekanntmachung des Hinweises auf die Patenterteilung: **24.09.2003**
(21) Anmeldenummer: 99111242.6
(22) Anmeldetag: 09.06.1999
(51) Int. Cl.: C02F 1/72, C02F 1/76

(54) **Verfahren zum Abbau von Hydroxylamin in wässrigen Lösungen**
Method of decomposing hydroxylamine in aqueous solutions
Procédé de décomposition d'hydroxylamine dans les solutions aqueuses

(30) Priorität: 10.06.1998 DE 19826018
(43) Veröffentlichungstag der Anmeldung: 15.12.1999
(73) Patentinhaber: BASF AKTIENGESELLSCHAFT, 67056 Ludwigshafen (DE)
(72) Erfinder: Leutner, Bernd, Dr., 67227 Frankenthal (DE); Hanus, Frank, 74918 Angelbachtal (DE); Schneider, Hans-Michael, Dr., 67549 Worms (DE); Watzenberger, Otto, Dr., 68199 Mannheim (DE); Wegmann, Uwe, 68199 Mannheim (DE)
(74) Vertreter: Kinzebach, Werner, Dr.

(56) Entgegenhaltungen:
- US-A- 5 062 966

## Beschreibung

Die vorliegende Erfindung betrifft ein Verfahren zum Abbau von Hydroxylamin in wässrigen Lösungen, insbesondere in Abwässern, durch Behandlung mit einem Oxidationsmittel.

Bei einer Reihe chemischer Prozesse fallen hydroxylaminhaltige Abwässer an, die auf Grund der Bakterientoxizität des Hydroxylamins Probleme hinsichtlich ihrer Entsorgung aufwerfen. Hydroxylamin ist nur mäßig beständig und zersetzt sich bereits beim Erwärmen, zum Beispiel in alkalischer Lösung zu NH₃ und N₂ und in saurer Lösung zu NH₃ und N₂O. Die Geschwindigkeit dieser Reaktionen ist jedoch für den effektiven Abbau von Hydroxylamin in Abwässern zu gering.

Hydroxylamin stellt ein starkes Reduktionsmittel dar und ist deshalb prinzipiell oxidativ zersetzbar, jedoch ist bekannt, dass die Salze des Hydroxylamins eine beträchtliche Oxidationsstabilität aufweisen. Um eine leichte Oxidierbarkeit des Hydroxylamins zu gewährleisten, erfolgt die Umsetzung mit Oxidationsmitteln im basischen oder stark basischen Milieu, da hier das Hydroxylamin als freie, weniger beständige Base vorliegt. Als Oxidationsmittel geeignet sind unter anderem Sauerstoff, Ozon, Nitrite, Nitrate, Halogene, wie Chlor, Brom und Iod, Hypohalogenite, wie Natriumhypochlorit, Kaliumhypochlorit und Calciumhypochlorit, Wasserstoffperoxid, Peroxidverbindungen, wie Peroxomono- und Peroxodisulfate, Mangandioxid, Permanganate, Chromate und Dichromate.

So beschreibt die SU 617 366 (inventor's certificate) ein Verfahren zur Zersetzung konzentrierter Calciumhypochloritlösungen mit Hydroxylamin, das im Überschuss verwendet werden muss. In der US-A-5,062,966 ist ein Verfahren zur Zersetzung konzentrierter Lösungen von Hydroxylammoniumsalzen beschrieben, wobei der pH-Wert durch Basenzugabe auf > 8, vorzugsweise > 12, eingestellt und anschließend mit Hypochlorit umgesetzt wird.

Die bekannten Verfahren haben den Nachteil, dass bei Anwesenheit von anderen Stickstoffbasen, z. B. Ammoniak, der herstellungsoder auch zersetzungsbedingt in Hydroxylamin enthalten sein kann, diese Basen ebenfalls oxidiert werden. Dadurch wird der Oxidationsmittelverbrauch erhöht und es können sich unerwünschte Nebenprodukte bilden. Außerdem muss das stark basische Abwasser neutralisiert werden, was zu einer unerwünschten hohen Salzfracht führt.

Der vorliegenden Erfindung liegt daher die Aufgabe zugrunde, ein Verfahren bereitzustellen, das den Abbau von hydroxylaminhaltigen wässrigen Lösungen, insbesondere hydroxylaminhaltigen Abwässern, über einen weiten Konzentrationsbereich bis zu einer geringen Restkonzentration ermöglicht, und zwar bei hohen Reaktionsgeschwindigkeiten. Außerdem soll das Verfahren eine hinreichende Selektivität gegenüber Hydroxylamin auch bei Anwesenheit anderer organischer Stoffe, insbesondere Ammoniak und Aminen, aufweisen.

Es wurde nun überraschend gefunden, dass man selektiv Hydroxylamin in wässrigen Lösungen, insbesondere in Abwässern, abbauen kann, wenn man die Abwässer mit Hypohalogeniten oder Peroxomonooder Peroxodisulfaten bei einem pH-Wert < 8 behandelt. Dies konnte im Hinblick auf die US 5,062,966, wonach eine Oxidation mit Hypochlorit nur im stark Alkalischen wirksam erfolgt, nicht erwartet werden. Insbesondere war überraschend, dass der Abbau von Hydroxylamin bei pH < 8 selektiv erfolgt.

Die vorliegende Erfindung betrifft somit ein Verfahren zum Abbau von Hydroxylamin in wässrigen Lösungen, insbesondere in Abwässern, durch Behandlung mit einem Oxidationsmittel, das dadurch gekennzeichnet ist, dass man als Oxidationsmittel ein Alkalioder Erdalkalimetallhypohalogenit oder Peroxomono- oder Peroxodischwefelsäure oder ein Salz davon verwendet und die Behandlung mit dem oxidationsmittel bei einem pH-wert < 8 durchführt.

Vorzugsweise wird die Behandlung mit dem Oxidationsmittel bei einem pH-Wert im Bereich von 3 bis 7,8, besonders bevorzugt im Bereich von 5 bis 7,5 und ganz besonders bevorzugt im Bereich von 6 bis 7,5 durchgeführt. In den Fällen, in denen die hydroxylaminhaltigen, wässrigen Lösungen einen davon verschiedenen pH-Wert aufweisen, ist es notwendig, durch Zugabe von Säuren (z. B. Schwefelsäure oder Salzsäure) oder Laugen (z. B. NaOH) einen pH-Wert im erfindungagemäßen Bereich einzustellen. In der Regel genügt es, den pH-Wert einmal vor Beginn der Zugabe des Oxidationsmittels auf einen geeigneten Wert im erfindungsgemäßen Bereich einzustellen, jedoch kann es in Abhängigkeit von der Konzentration des Hydroxylamins und der Art und Konzentration gegebenenfalls vorhandener Begleitstoffe in den Abwässern vorteilhaft sein, den pH-Wert während der Zugabe des Oxidationsmittels zu kontrollieren und gegebenenfalls entsprechend zu regulieren.

Das erfindungsgemäße Verfahren eignet sich besonders zum Abbau von Hydroxylamin in wässrigen Lösungen, insbesondere in Abwässern, mit einer Hydroxylaminkonzentration bis zu 20 g/l und führt in der Regel zu einer Hydroxylaminrestkonzentration von weniger als 100 ppm, insbesondere weniger als 25 ppm und besonders bevorzugt weniger als 10 ppm. Besonders vorteilhaft ist ferner, dass dieses Verfahren einen selektiven Abbau von Hydroxylamin auch in Gegenwart organischer Begleitstoffe, insbesondere von Ammoniak und Aminen, erlaubt, wobei die Ammoniakkonzentration bis zu 10 g/l betragen kann.

Das Verfahren kann kontinuierlich oder diskontinuierlich, vorzugsweise diskontinuierlich, d. h. durch Zugabe des Oxidationsmittels zu der gesammelten Hydroxylaminlösung, durchgeführt werden. Zum diskontinuierlichen Abbau großer Mengen hydroxylaminhaltiger Abwässer arbeitet man vorteilhaft im Wechselbetrieb mit wenigstens zwei Behältern oder Reaktoren.

Geeignete Oxidationsmittel zur Behandlung der hydroxylaminhaltigen wässrigen Lösungen sind Alkalimetallhypohalogenite, wie Alkalimetallhypochlorite und Alkalimetallhypobromite, insbesondere Alkalimetallhypochlorite, bevorzugt Natriumhypochlorit und Kaliumhypochlorit, Erdalkalimetallhypohalogenite, wie Erdalkalimetallhypochlorite und Erdalkalimetallhypobromite, insbesondere Magnesiumhypochlorit und Calciumhypochlorit, Peroxomono- und Peroxodischwefelsäure und deren Salze, z. B. die Alkalimetall- und Ammoniumsalze, insbesondere Natriumperoxodisulfat und Kaliumperoxodisulfat. Besonders bevorzugt sind Natriumhypochlorit und Natriumperoxodisulfat. Man kann auch Gemische von zwei oder mehreren der Oxidationsmittel verwenden.

In der Regel werden die Oxidationsmittel im erfindungsgemäßen Verfahren in Form wäsariger Lösungen eingesetzt. Geeignete Konzentrationen der Lösungen liegen im Bereich von 5 Gew.-% bis 70 Gew.-%, insbesondere im Bereich von 10 Gew.-% bis 50 Gew.-%. Besonders bevorzugt liegt die Konzentration der Natriumhypochlorit-Lösungen im Bereich von 10 Gew.-% bis 20 Gew.-% (10 % bis 13 % Gehalt an aktivem Chlor) und die Konzentration der Natriumperoxodisulfat-Lösungen im Bereich von 20 Gew.-% bis 50 Gew.-%. Das Oxidationsmittel wird in der Regel in einer Menge von 1,1 bis 3, insbesondere 1,1 bis 1,5 Mol-Äquivalenten, bezogen auf den Hydroxylamingehalt der zu behandelnden wässrigen Lösung, eingesetzt. Die Zugabe des Oxidationsmittels erfolgt, kontinuierlich oder portionsweise, vorzugsweise kontinuierlich, in der Regel über einen Zeitraum von 5 bis 90 Minuten, vorzugsweise 5 bis 45 Minuten.

Für eine hinreichend hohe Abbaurate des Hydroxylamins bei möglichst geringem Oxidationsmittelverbrauch ist es vorteilhaft, für eine starke Vermischung von hydroxylaminhaltiger, wässriger Lösung und Oxidationsmittel zu sorgen. Geeignete Vorrichtungen, die eine starke Vermischung ermöglichen, sind dem Fachmann bekannt (siehe auch Ullmanns Enzyklopädie der technischen Chemie, Bd. 1, 3. Auflage, 1951, S. 701 ff.). In der Regel kann die Vermischung mittels Rührern, wie Propeller-, Blatt- oder Paddelrührern, Inline-Mischern, Eindüsungsvorrichtungen u. a., erfolgen. Die Reaktionszeit bis zum vollständigen Abbau liegt bei einer Stunde und weniger. Insbesondere bei Verwendung von Hypochlorit werden Reaktionszeiten von 10 Minuten und weniger benötigt.

vorzugsweise werden Prozessparameter, wie pH-Wert, Redoxpotential, Gasentwicklung, Temperaturentwicklung usw. zur automatischen Steuerung der Oxidationsmittelzugabe eingesetzt. Besonders bevorzugt ist die Steuerung der Oxidationsmittelzugabe durch Online-Messung des Redoxpotentials während der erfindungsgemäßen Behandlung. Geeignete Elektroden zur Messung des Redoxpotentials sind dem Fachmann bekannt. In einer besonders bevorzugten Ausführungsform des erfindungsgemäßen Verfahrens wird das Oxidationsmittel mittels einer Dosierungseinrichtung so zu den gesammelten hydroxylaminhaltigen Abwässern gegeben, dass innerhalb von 5 bis 90 min, vorzugsweise von 5 bis 45 min, 1,1 bis 3 Moläquivalente, insbesondere 1,1 bis 1,5 Moläquivalente des Oxidationsmittels, bezogen auf den Gehalt an Hydroxylamin, kontinuierlich zugeführt sind.

Dabei erfolgt die Steuerung der Oxidationsmittelzugabe und -menge vorteilhaft dadurch, dass die kontinuierliche Zugabe beim Erreichen einer geeigneten, experimentell ermittelten Redoxpotentialdifferenz automatisch beendet wird. In der Regel zeigt bei Verwendung von Alkali- oder Erdalkalimetallhypohalogeniten ein Betrag der Redoxpotentialänderung im Bereich von 100 mV bis 700 mV, insbesondere im Bereich von 150 mV bis 300 mV, über die Verfahrensdauer zuverlässig den erfolgten Abbau des Hydroxylamins an. Bei Verwendung von Alkalimetallperoxodisulfaten zeigt ein Betrag der Redoxpotentialänderung im Bereich von 600 mV bis 1 000 mV, insbesondere 700 mV bis 900 mV, über die Verfahrensdauer zuverlässig den erfolgten Abbau des Hydroxylamins an. Das solchermaßen gesteuerte verfahren führt in der Regel zu Abbauraten > 90 %, insbesondere > 95 %, bei einem Oxidationsmittelverbrauch kleiner als 2 Moläquivalente.

Das erfindungsgemäße Verfahren kann in einem weiten Temperaturbereich durchgeführt werden. In Abhängigkeit von dem eingesetzten Oxidationsmittel ist eine geeignete Temperatur zum Erreichen einer hohen Abbaurate bei geringem Oxidationsmittelverbrauch zu wählen. Geeignete Temperaturen beim Einsatz von Hypohalogeniten als Oxidationsmittel liegen im Bereich von Raumtemperatur bis 90 °C, insbesondere im Bereich von 50 °C bis 90 °C. Beim Einsatz von Peroxomono- oder Peroxodisulfaten liegen die geeigneten Temperaturen im Bereich von 50 °C bis 100 °C, insbesondere von 75 °C bis 95 °C.

Die im Folgenden angegebenen Beispiele sollen die vorliegende Erfindung verdeutlichen.

### Beispiele

### I. Oxidativer Abbau von hydroxylaminhaltigen Abwässern mit Natriumhypochlorit im Labormaßstab.

In einem 500 ml-Reaktor mit beheiztem, thermostatgesteuertem Ölbad wurden Abwasserproben mit bekanntem Hydroxylamin- und Ammoniakgehalt unter starkem Rühren mittels eines Magnetrührers (550 U/min) auf 80 °C temperiert und bei verschiedenen pH-Werten die entsprechenden Mengen Oxidationsmittel (NaOCl-Lösung mit 12,5 % Gehalt an aktivem Chlor) kontinuierlich über die in der Tabelle angegebenen Zeiträume (t_{D}) zudosiert. Nach der in der Tabelle angegebenen Gesamtreaktionsdauer t_{R} wurde die Resthydroxylaminkonzentration bestimmt. Die Werte und Ergebnisse sind in Tabelle 1 zusammengefasst. Die Beispiele B1 und B2 wurden im erfindungsgemäßen pH-Bereich, das Vergleichsbeispiel VB1 bei stärker basischem pH durchgeführt. Die hohe Selektivität des erfindungsgemäßen Verfahrens gegenüber Hydroxylamin, auch in Gegenwart hoher Ammoniakkonzentrationen, zeigt sich in den geringen Hydroxylaminrestkonzentrationen bei geringem Oxidationsmittelverbrauch.

**Tabelle 1**

| | T [°C] | pH | Moläquivalente NaOCl | t_{D} [min] | t_{R} [min] | NH₂OH-Konz.¹⁾ (mg/1] | | NH₃Konz. [mg/l] |
|---|---|---|---|---|---|---|---|---|
| | | | | | | Anfang | Ende | |
| B1 | 80 | 7,5 | 2,8 | 10 | 30 | 1040 | 10 | 2500 |
| B2 | 80 | 7,8 | 1,4 | 10 | 60 | 1120 | 25 | 2500 |
| VB1 | 80 | 8,7 | 1,4 | 10 | 60 | 1120 | 780 | 2500 |

| | | | | | | | | |
|---|---|---|---|---|---|---|---|---|
| ¹⁾ Die Bestimmung der uydroxylamin-Konzentrationen erfolgte, gegebenenfalls nach Verdünnen, durch photometrische Titration des roten Azofarbstoffes, der durch Aufoxidation von Hydroxylamin zu Nitrit mit Iod und anschließender Umsetzung mit Sulfanilsäure und 1-Naphthylamin (Lunge-Reagenz) entsteht. | | | | | | | | |

### II. Oxidativer Abbau von hydroxylaminhaltigen Abwässern mittels redoxpotentialabhängiger Steuerung der Natriumhypochloritzugabe im Technikumsmaßstab

In einem über einen Doppelmantel mittels externem Kryostaten temperierten 15-l-Reaktor mit einem zentrisch angeordneten Blattrührer, einer pH-Elektrode, einer Pt/3M KCl/AgCl/Ag-Elektrode zur Messung des Redoxpotentials und einer Dosierpumpe (Membranpumpe) mit redoxpotentialgesteuerter Endabschaltung werden zu je ca. 15 l hydroxylamin- und ammoniakhaltigem Abwasser (Konzentrationen und Temperatur siehe Tabelle 2) unter starkem Rühren pro Minute 170 ml wässrige NaOCl-Lösung (12,5 % Gehalt an aktivem Chlor) zudosiert, bis die eingestellte Redoxpotentialdifferenz erreicht ist, die zur Endabschaltung der Dosierpumpe führt. Aufgrund der hohen Abbaugeschwindigkeit unter den gewählten Bedingungen entspricht die Reaktionszeit t_{R}, innerhalb der die gewünschte Abbaurate erreicht wurde, praktisch der Zudosierungszeit t_{D}. AnschlieBend wurde die Hydroxylaminrestkonzentration photometrisch mit Lunge-Reagenz bestimmt. Zur Beurteilung der Leistungsfähigkeit des Systems wurden die Anfangskonzentrationen an Hydroxylamin und Ammoniak in den Abwässern bestimmt, die Versuche jedoch unabhängig von den ermittelten Konzentrationen einheitlich bis zu der durch die festgelegte Redoxpotentialdifferenz ausgelösten Endabschaltung der Oxidationsmittelzugabe durchgeführt. Die erfindungsgemäßen Beispiele B3 und B4 demonstrieren die Unabhängigkeit des Verfahrens von den vorliegenden Anfangskonzentrationen an Hydroxylamin und seine hohe Selektivität, auch in Gegenwart hoher Ammoniakkonzentrationen. Das Vergleichsbeispiel VB2 wurde unter analogen Bedingungen, jedoch bei einem stärker basischem pH-Wert (pH-9,6) durchgeführt und zeigt einen durch mangelnde Selektivität bedingten hohen Oxidationsmittelverbrauch.

**Tabelle 2**

| | T [°C] | pH | Moläquivalente NaOCl | t_{D}- t_{R}¹⁾[min] | NH₂OH-Konz.²⁾ [mg/l] | | NH₃Konz. | Δ³⁾ Redoxpotential [mV] |
|---|---|---|---|---|---|---|---|---|
| | | | | | Anfang | Ende | | |
| B3 | 80 | 7,0 | 1,2 | 41 | 6020 | 9 | 4600 | 250 |
| B4 | 80 | 7,0 | 1,2 | 8 | 1020 | 3 | 4700 | 250 |
| VB2 | 80 | 9,6 | 5,4 | 40 | 1190 | 4 | 4800 | 250 |

| | | | | | | | | |
|---|---|---|---|---|---|---|---|---|
| ¹⁾ Kontinuierliche Zugabe mittels einer Dosierpumpe mit einer Förderrate von 170 ml/min. Als Oxidationsmittel wurde eine wässrige, 12,5-%ige NaOCl-Lösung eingesetzt. | | | | | | | | |
| ²⁾ Zur Bestimmung der Hydroxylamin-Konzentrationen siehe Tabelle 1, Fußnote 1). | | | | | | | | |
| ³⁾ Messung des Redoxpotentials mittels einer Pt/3M KCl/AgCl/Ag-Elektrode, Endabschaltung der Dosierpumpe, wenn der Betrag der Änderung des Redoxpotentials einen Wert von 250 mV erreicht. | | | | | | | | |

## Patentansprüche

1. Verfahren zum Abbau von Hydroxylamin in wässrigen Lösungen, insbesondere in Abwässern, durch Behandlung mit einem Oxidationsmittel, **dadurch gekennzeichnet, dass** man als Oxidationsmittel ein Alkali- oder Erdalkalimetallhypohalogenit oder Peroxomono- oder Peroxodischwefelsäure oder ein Salz davon verwendet und die Behandlung mit dem Oxidationsmittel bei einem pH-Wert < 8 durchführt.

2. Verfahren nach Anspruch 1, **dadurch gekennzeichnet, dass** man die Behandlung mit dem Oxidationsmittel bei einem pH-Wert im Bereich von 3 bis 7,8 durchführt.

3. Verfahren nach Anspruch 1 oder 2, **dadurch gekennzeichnet, dass** man als Oxidationsmittel ein Alkalimetallhypochlorit, insbesondere Natriumhypochlorit, verwendet.

4. Verfahren nach einem der vorhergehenden Ansprüche, **dadurch gekennzeichnet, dass** man 1,1 bis 3 Mol-Äquivalente an Oxidationsmittel verwendet.

5. Verfahren nach einem der vorhergehenden Ansprüche, **dadurch gekennzeichnet, dass** die wässrige Lösung bis zu 20 g/l Hydroxylamin und gegebenenfalls bis 10 g/l Ammoniak enthält.

6. Verfahren nach einem der vorhergehenden Ansprüche, **dadurch gekennzeichnet, dass** die Behandlung der wässrigen Lösung mit dem Oxidationsmittel unter starker Vermischung erfolgt.

7. Verfahren nach einem der vorhergehenden Ansprüche, **dadurch gekennzeichnet, dass** das Oxidationsmittel zu dem gesammelten Abwasser gegeben wird.

8. Verfahren nach einem der Ansprüche 1 bis 6, **dadurch gekennzeichnet, dass** das Oxidationsmittel und das Abwasser kontinuierlich zusammengeführt werden.

9. Verfahren nach einem der vorhergehenden Ansprüche, **dadurch gekennzeichnet, dass** die Behandlung der hydroxylaminhaltigen, wässrigen Lösungen mit Alkali- oder Erdalkalimetallhypohalogeniten bei einer Temperatur im Bereich von Raumtemperatur bis 90 °C durchgeführt wird.

10. Verfahren nach einem der vorhergehenden Ansprüche, **dadurch gekennzeichnet, dass** die Behandlung der hydroxylaminhaltigen, wässrigen Lösungen mit Alkalimetallperoxodisulfaten bei einer Temperatur im Bereich von 50 °C bis 100 °C durchgeführt wird.

## Claims

1. A process for breaking down hydroxylamine in aqueous solutions, especially wastewaters, by treatment with an oxidizing agent, which comprises using as said oxidizing agent an alkali metal hypohalite or alkaline earth metal hypohalite or peroxomonosulfuric or peroxodisulfuric acid or a salt thereof and carrying out the treatment with said oxidizing agent at a pH < 8.

2. A process as claimed in claim 1, wherein treatment with the oxidizing agent is carried out at a pH in the range from 3 to 7.8.

3. A process as claimed in claim 1 or 2, wherein said oxidizing agent is an alkali metal hypochlorite, especially sodium hypochlorite.

4. A process as claimed in any of the preceding claims, wherein from 1.1 to 3 molar equivalents of oxidizing agent are used.

5. A process as claimed in any of the preceding claims, wherein the aqueous solution contains up to 20 g/l of hydroxylamine and, if desired, up to 10 g/l of ammonia.

6. A process as claimed in any of the preceding claims, wherein treatment of the aqueous solution with the oxidizing agent takes place with thorough mixing.

7. A process as claimed in any of the preceding claims, wherein the oxidizing agent is added to the collected wastewater.

8. A process as claimed in any one of claims 1 to 6, wherein the oxidizing agent and the wastewater are brought together continuously.

9. A process as claimed in any of the preceding claims, wherein the treatment of the hydroxylamine-carrying aqueous solutions with alkali metal hypohalites or alkaline earth metal hypohalites is carried out at a temperature in the range from room temperature to 90°C.

10. A process as claimed in any of the preceding claims, wherein the treatment of the hydroxylamine-carrying aqueous solutions with alkali metal peroxodisulfates is carried out at a temperature in the range from 50°C to 100°C.

## Revendications

1. Procédé de décomposition de l'hydroxylamine dans des solutions aqueuses, en particulier dans les eaux usées, au moyen d'un traitement avec un agent oxydant, **caractérisé en ce que** l'on utilise, en tant qu'agent oxydant, un hypohalogénite de métal alcalin ou alcalino-terreux ou l'acide peroxomono- ou peroxodi-sulfurique ou un sel de ceux-ci, et que l'on réalise le traitement avec l'agent oxydant à un pH inférieur à 8.

2. Procédé selon la revendication 1, **caractérisé en ce que** l'on réalise le traitement avec l'agent oxydant à un pH allant de 3 à 7,8.

3. Procédé selon la revendication 1 ou 2, **caractérisé en ce que** l'on utilise, en tant qu'agent oxydant, un hypochlorite de métal alcalin, en particulier l'hypochlorite de sodium.

4. Procédé selon l'une quelconque des revendications précédentes, **caractérisé en ce que** l'on utilise de 1,1 à 3 équivalents molaires de l'agent oxydant.

5. Procédé selon l'une quelconque des revendications précédentes, **caractérisé en ce que** la solution aqueuse contient jusqu'à 20 g/L d'hydroxylamine et éventuellement jusqu'à 10 g/L d'ammoniaque.

6. Procédé selon l'une quelconque des revendications précédentes, **caractérisé en ce que** l'on réalise le traitement de la solution aqueuse avec l'agent oxydant en agitant vigoureusement.

7. Procédé selon l'une quelconque des revendications précédentes, **caractérisé en ce que** l'on ajoute l'agent oxydant aux eaux usées collectées.

8. Procédé selon l'une quelconque des revendications 1 à 6, **caractérisé en ce que** l'on laisse confluer l'agent oxydant et les eaux usées en continu.

9. Procédé selon l'une quelconque des revendications précédentes, **caractérisé en ce que** l'on réalise le traitement des solutions aqueuses contenant de l'hydroxylamine ave des hypohalogénites de métal alcalin ou alcalino-terreux à une température allant de la température ambiante jusqu'à 90°C.

10. Procédé selon l'une quelconque des revendications précédentes, **caractérisé en ce que** l'on réalise le traitement des solutions aqueuses contenant de l' hydroxylamine avec des peroxodisulfates de métal alcalin ou alcalino-terreux à une température allant de 50°C à 100°C.
